(19) Europäisches Patentamt
European Patent Office
Office européen des brevets

(11) **EP 1 811 410 A1**

(12) **EUROPEAN PATENT APPLICATION**
published in accordance with Art. 158(3) EPC

(43) Date of publication:
**25.07.2007 Bulletin 2007/30**

(51) Int Cl.:
***G06F 17/50*** *(2006.01)* ***A41H 3/00*** *(2006.01)*

(21) Application number: **05788058.5**

(22) Date of filing: **03.10.2005**

(86) International application number:
**PCT/JP2005/018295**

(87) International publication number:
**WO 2006/040957 (20.04.2006 Gazette 2006/16)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **12.10.2004 JP 2004297934**

(71) Applicant: **Digital Fashion Ltd.
Osaka-shi,
Osaka 530-0004 (JP)**

(72) Inventors:
- **SAKAGUCHI, Yoshiyuki
  Osaka 5410 053 (JP)**
- **ZHANG, Dongliang
  Osaka-shi, Osaka 5410053 (JP)**

(74) Representative: **Müller-Boré & Partner
Patentanwälte
Grafinger Strasse 2
81671 München (DE)**

(54) **VIRTUAL PAPER PATTERN FORMING PROGRAM, VIRTUAL PAPER PATTERN FORMING DEVICE, AND VIRTUAL PAPER PATTERN FORMING METHOD**

(57) A warp line is set directly on the surface of a virtual three-dimensional object model. A score set portion 22 configured to set scores for a virtual dress model formed within a 3-D space according to a manipulation instruction from the user to divide the virtual dress model into plural paper pattern regions R according to a manipulation instruction from the user, a warp line set portion 23 configured to set a warp line Lg for the paper pattern region R according to a manipulation instruction from the user, and a development portion 24 configured to form a virtual paper pattern by developing the paper pattern regions R into a 2-D plane in such a manner that the warp line Lg set by the warp line set portion 23 becomes linear, are included.

FIG.1

**Description**

**Technical Field**

The present invention relates to a technique for virtually forming a paper pattern of a three-dimensional object.

**Background Art**

Patent Document 1 discloses an image processing apparatus that forms a virtual paper pattern by forming a virtual 3-D dress model within a virtual 3-D space and developing the virtual 3-D dress model thus formed into a 2-D plane according to manipulation instructions from the user.

Incidentally, fabric has anisotropy in a stretch direction so that its coefficient of stretch varies with a stretched direction, and in order to make a highly stable dress that fully reflects the kinetic property of the fabric, it is necessary to make a dress in such a manner that the fine line direction of the fabric (generally, the warp thread direction) goes along the direction of gravitational force when one puts on the dress. To this end, in the apparel industry, a warp line (reference line) to specify the fine line direction is set for the paper pattern, and a dress is made by cutting the fabric in such a manner that the fine line direction of the fabric coincides with the warp line direction thus set. In a case where a three-dimensional object, such as shoes, is formed using a skin of an animal, such as cows, the skin also has anisotropy as with fabric and it is necessary to make a three-dimensional object in such a manner that the backbone direction of the skin having a lower coefficient of stretch goes along the direction of gravitational force. The reference line to specify the backbone direction is therefore set for the paper pattern as in the case of fabric.
Patent Document 1: JP-A-2004-70519

**Disclosure of the Invention**

According to the technique of Patent Document 1, however, a polygon mesh is set on the surface of the virtual 3-D dress model and the virtual 3-D dress model is merely developed into a 2-D plane in such a manner so as to minimize distortions of the polygon mesh, and the development is not performed by taking the reference line into account. A work to set the reference line for the developed virtual paper pattern is therefore required.

Also, because the virtual paper pattern and an actual paper pattern are planar, it is difficult to predict quickly from the paper pattern the positional relation of the fabric, which was cut into pieces along the paper pattern and sewed together, with respect to the direction of gravitational force or the positional relation of the fabric with respect to the entire dress, and it is not easy to set the reference line.

An object of the invention is to provide a virtual paper pattern forming program, a virtual paper pattern forming device, and a virtual paper pattern forming method, all capable of setting the reference line directly for a virtual three-dimensional object model.

A virtual paper pattern forming program of the invention is a virtual paper pattern forming program that virtually forms a paper pattern of a three-dimensional object, causing a computer to function as follows: three-dimensional object model forming means for acquiring 3-D data of the three-dimensional object and forming a virtual three-dimensional object model within a virtual 3-D space; contour line setting means for setting a contour line of the paper pattern on a surface of the virtual three-dimensional object model to divide the surface of the virtual three-dimensional object model into plural regions; reference line setting means for setting a reference line for one region divided by the contour line setting means according to a manipulation instruction from a user; and development means for developing the virtual three-dimensional object model in a 2-D space region by region in such a manner that the reference line becomes linear to form a virtual paper pattern.

Also, a virtual paper pattern forming device of the invention is a virtual paper pattern forming device that virtually forms a paper pattern of a three-dimensional object, including: three-dimensional object model forming means for acquiring 3-D data of the three-dimensional object and forming a virtual three-dimensional object model within a virtual 3-D space; contour line setting means for setting a contour line of the paper pattern on a surface of the virtual three-dimensional object model to divide the surface of the virtual three-dimensional object model into plural regions; reference line setting means for setting a reference line for one region divided by the contour line setting means according to a manipulation instruction from a user; and development means for developing the virtual three-dimensional object model in a 2-D space for each divided region in such a manner that the reference line becomes linear to form a virtual paper pattern.

A virtual paper pattern forming method of the invention is a virtual paper pattern forming method for enabling a computer to virtually form a paper pattern of a three-dimensional object, the computer including three-dimensional object model forming means, contour line setting means, reference line setting means, and development means, the method including: a step of acquiring 3-D data of the three-dimensional object and forming a virtual three-dimensional object model within a virtual 3-D space by the three-dimensional object model forming means; a step of setting a contour line of the paper pattern on a surface of the virtual three-dimensional object model to divide the surface of the virtual three-dimensional object model into plural regions by the contour line setting means; a step of setting a reference line for one region divided by the contour line setting means according to a manipulation instruction from a user by the reference line setting means; and a step of developing the virtual three-dimensional object model in a 2-D space for each divided region in such a manner that the reference line becomes linear to form a virtual paper pattern by the development means.

According to these configurations, 3-D data of a three-dimensional object is acquired to form a virtual three-dimensional object model within a virtual 3-D space. The contour line is set on the surface of the virtual three-dimensional object model, and a reference line is set on the surface of one region (one arbitrary region among plural regions on the surface of the virtual 3-D three-dimensional object) among plural regions divided by the contour line according to a manipulation instruction from the user. A virtual paper pattern is then formed by developing each region into a 2-D plane in such a manner that the reference line thus set becomes a straight line. The user is therefore able to set the reference line directly on the virtual three-dimensional object model formed within the 3-D space. As a consequence, the user is able to set the reference line while he understands the position or the like of the virtual paper pattern with respect to the entire virtual three-dimensional object model, which enables the user to set the reference line with ease.

Brief Description of the Drawings

Fig. 1 is a block diagram showing the configuration of a virtual paper pattern forming device according to one embodiment.

Fig. 2 is a flowchart detailing the processing by the virtual paper pattern forming device.

Fig. 3 is a view showing an image displayed on a display portion by a display control portion when the user sets a warp line.

Fig. 4 is a view showing an initial polygon line.

Fig. 5 is a view used to describe processing to develop the initial polygon line into a 2-D plane in such a manner that a warp line becomes linear; (a) of the Fig. 5 showing the initial polygon line before development and (b) of the Fig. 5 showing the initial polygon line after development.

Fig. 6 is a view showing a case where a point $V_i'$ is an externally dividing point of a line segment $P_j P_{j+1}$.

Fig. 7 is a view showing a manner in which polygon lines are extracted.

Fig. 8 is a view used to describe development processing; (a) of the Fig. 8 showing polygons before development and (b) of the Fig. 8 showing polygons after development.

Fig. 9 is a view used to describe the development processing of a polygon line in detail.

Fig. 10 is a view showing a mass-spring model.

Fig. 11 is a view used to describe local relaxation processing.

Fig. 12 is a view used to describe the local relaxation processing.

Fig. 13 is a view showing overlapping caused by global relaxation processing; Fig. 13A showing a polygon mesh before the global relaxation processing, Fig. 13B showing the polygon mesh after the global relaxation processing, and Fig. 13C showing the polygon mesh in which the overlapping has been corrected.

Fig. 14 is a view used to describe a manner in which polygon lines are extracted from a paper pattern region when two warp lines are set.

Fig. 15 is a view showing a virtual paper pattern formed by the virtual paper pattern forming device; Fig. 15A showing a paper pattern region of a 3-D virtual dress formed on a virtual human body model, Fig. 15B showing a virtual paper pattern obtained by developing a paper pattern region into a 2-D plane by the method in the related art that does not take a warp line into account, and Fig. 15C showing a virtual paper pattern developed by the virtual paper pattern forming device.

Best Mode for Carrying Out the Invention

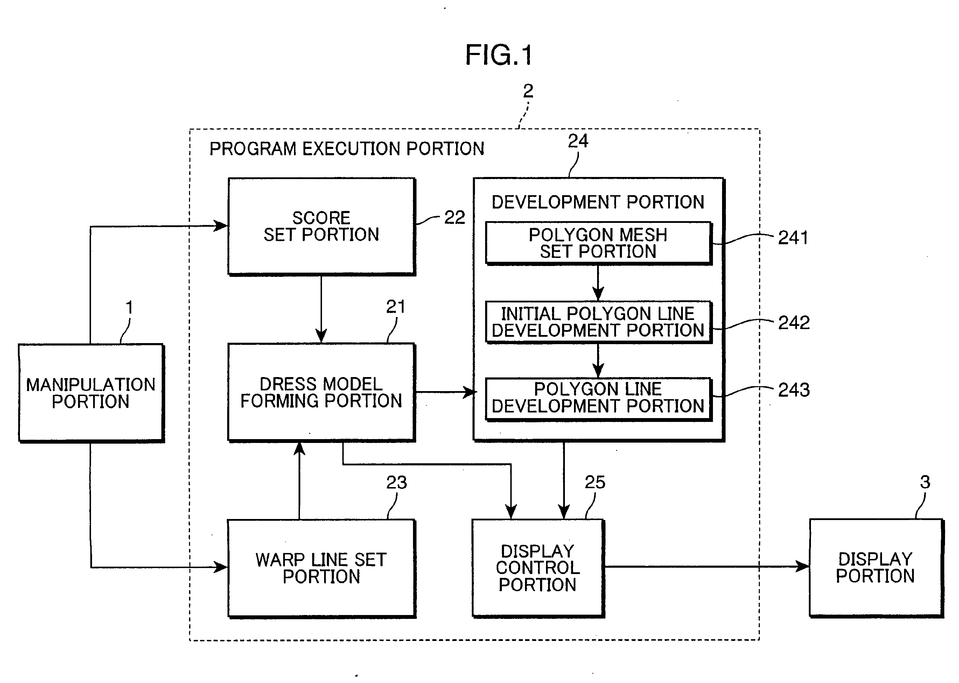

Hereinafter, the best mode of the invention will be described with reference to the drawings. Fig. 1 is a block diagram showing the configuration of a virtual paper pattern forming device according to this embodiment. The virtual paper pattern forming device comprises a personal computer in which a virtual paper pattern forming program is pre-installed, and includes a manipulation portion 1, a program execution portion 2, and a display portion 3.

The manipulation portion 1 comprises an input device, such as a keyboard and a mouse, and accepts a manipulation instruction from the user. The program execution portion 2 comprises a CPU or the like, and functions as a dress model forming portion 21, a score set portion 22, a warp line set portion 23, a development portion 24, and a display control portion 25 by executing the virtual paper pattern forming program stored in an unillustrated hard disc on the CPU.

The dress model forming portion 21 forms a virtual dress model within a virtual 3-D space using the method described in JP-A-2004-70519 according to a manipulation instruction from the user that has been accepted in the manipulation portion 1. To be more concrete, of the protruding points, such as the apex of the bust and the apex of the blade bone of a virtual human body model pre-formed within the virtual 3-D space, a line that passes by the protruding point (for example, the apex of the bust) specified by the user and goes along the surface of the virtual human body model (for example, a bust line) is drawn.

The line thus drawn is slid in a certain direction according to a manipulation instruction from the user, and the loci of the line left in this instance are defined as a part of the forming surface of the virtual dress model. In a case where the loci left by the sliding intersect with the virtual human body model and fall in the virtual human body model, a portion corresponding to the fall-in loci is deformed to go along the surface shape of the virtual human body model. By repetitively performing such processing, the dress model forming portion 21 forms the virtual dress model, such as a skirt, a blouse, and a shirt.

The score set portion 22 sets scores in the virtual dress model formed by the dress model forming portion 21 according to a manipulation instruction from the user to divide the surface of the virtual dress model into plural regions. Because the virtual paper pattern is formed for each region, each region thus divided is referred to as the paper pattern region hereinafter.

The warp line set portion 23 sets a warp line on the surface of the paper pattern region according to a manipulation instruction from the user. The warp line is a straight line to specify the fine line direction of the fabric for the paper pattern, and it is generally used to specify the warp thread direction of the fabric or both the warp and weft thread directions. In this embodiment, assume that the warp line is used to specify the warp thread direction of the fabric. The warp line set portion 23 sets the warp line according to any of first through third methods set forth below that is chosen by the user.

The first method is a method by which a single warp line is set on the surface of the paper pattern region in such a manner that the warp line passes by an arbitrary one point on the paper pattern region specified by the user via the manipulation portion 1 while going along the direction of gravitational force pre-set in the virtual 3-D space. The second method is a method by which a line linking arbitrary two points on the paper pattern region specified by the user via the manipulation portion 1 is set as the warp line.

The third method is a method by which the warp line is set on the surface of the paper pattern region in such a manner that the warp line passes by one arbitrary point on the paper pattern region specified by the user via the manipulation portion 1 while being parallel to a contour line of the paper pattern region that is developed linearly. In a case where two or more contour lines to be developed linearly are present in the third method, the contour line present at the shortest distance from one point specified by the user is set as the warp line.

The development portion 24 includes a polygon mesh set portion 241, an initial polygon line development portion 242, and a polygon line development portion 243, and forms a virtual paper pattern by developing the respective paper pattern regions that together form the virtual dress model formed by the dress model forming portion 21 into 2-D planes.

The polygon mesh set portion 241 sets a polygon mesh comprising plural polygons (for example, triangular or rectangular polygons) on the surface of each paper pattern region.

The initial polygon line development portion 242 extracts, as an initial polygon line, a polygon line that intersects with the warp line set by the warp line set portion 23 from the polygon mesh set by the polygon mesh set portion 241, and develops the initial polygon line into a 2-D plane in such a manner that the shapes and the areas of the respective polygons forming the extracted initial polygon line are maintained intact while the warp line becomes a straight line.

The polygon line development portion 243 develops a polygon line adjacent to the polygon line (including the initial polygon line), which has been developed into the 2-D plane, into a 2-D plane through the plane development method using a known mass-spring model. The polygon line is thus developed into a 2-D plane in such a manner that the length of each side of the polygons is maintained intact. Thereafter, the polygon line development portion 243 repetitively performs extraction and development of the polygon line until all the polygons within the paper pattern region are developed into 2-D planes and thereby develops the paper pattern regions into 2-D planes. The plane development method using a mass-spring model is described in detail in known Reference Document 1 published by the inventors, Jituo Li, Dongliang Zhang, Guodong Lu, Yanying Peng, Xing Wen, Yoshiyuki Sakaguti, "Flattening triangulated surfaces using a mass-spring model", The International Journal of Advanced Manufacturing Technology, Springer-Verlag London Limited.

The display control portion 25 controls the display portion 3 to display the virtual dress model formed by the dress model forming portion 21, the virtual paper pattern formed by the development portion 24, and the like.

In this embodiment, the dress model forming portion 21 corresponds to three-dimensional object model forming means, the score set portion 22 corresponds to contour line setting means, the warp line set portion 23 corresponds to reference line setting means, the development portion 24 corresponds to development means, the initial polygon line development portion 242 corresponds to first polygon line development means, the polygon line development portion 243 corresponds to second polygon line development means, and the warp line corresponds to the reference line.

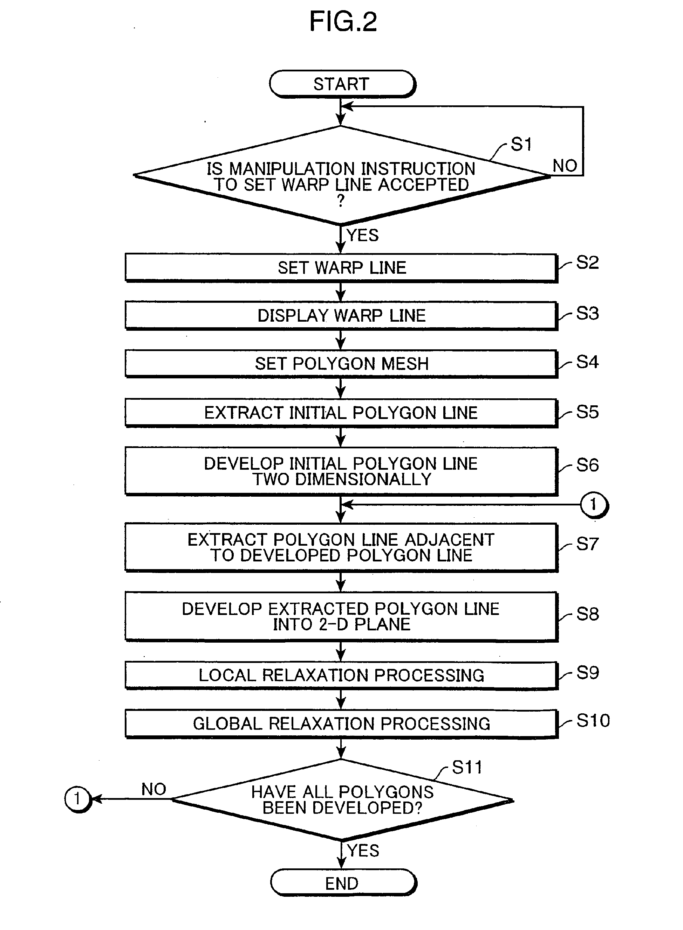

Fig. 2 is a flowchart showing the processing by the virtual paper pattern forming device. It is assumed that the virtual dress model has been formed by the dress model forming portion 21 before the flowchart is executed. Initially, in Step S1, in a case where the manipulation portion 1 accepts a manipulation instruction to set the warp line for the paper pattern region from the user (YES in S1), the warp line set portion 23 sets the warp line on the surface of the paper pattern region through any of the first through third methods (S2). It should be noted that the warp line set portion 23 sets the warp line using any of the first through third methods chosen by the user.

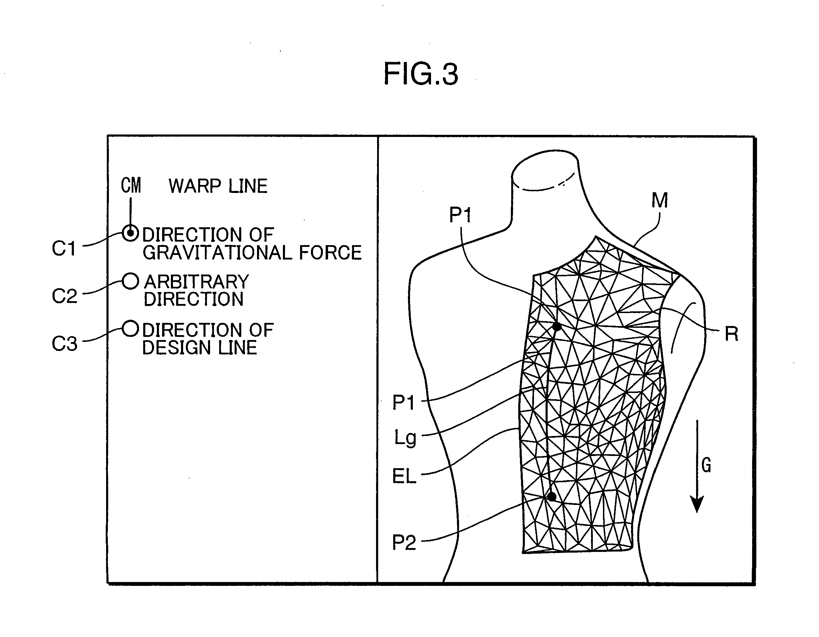

Fig. 3 is a view showing an image displayed on the display portion 3 by the display control portion 25 when the user sets the warp line. The image shown in Fig. 3 comprises an area on the right that shows a virtual human body model M and an area on the left used to choose the first through third methods. Texts, "Direction of Gravitational Force", "Arbitrary Direction", and "Direction of Design Line", are displayed in the area on the left, and check boxes C1 through C3 are displayed for the respective texts on their left. The virtual human body model M and the paper pattern region R are displayed in the area on the right. An arrow indicated by a capital G in the area on the right is a gravity vector indicating the direction of gravitational force pre-set within the virtual 3-D space.

Through a manipulation on the manipulation portion 1, the user chooses the first method by putting a check mark CM in the check box C1, chooses the second method by putting a check mark CM in the check box C2, and chooses the third method by putting a check mark CM in the check box C3.

In a case where the first method is chosen, the warp line set portion 23 finds a line of intersection of a plane including both a point P1, which is one point on the paper region R specified by the user, and the gravity vector G and the paper pattern region R, and sets the line of intersection thus found as a warp line Lg. Although the warp line Lg is set across the entire paper pattern region R, only part of the warp line Lg is displayed in the case of Fig. 3.

In a case where the second method is chosen, the warp line set portion 23 finds a line of intersection of a plane passing by a point P1 and a point P2, which are two points on the surface of the paper pattern region R specified by the user, and the paper pattern region R, and sets the line of intersection thus found as the warp line Lg.

In a case where the third method is chosen, the warp line set portion 23 sets a line positioned at a shortest distance from a point P1, which is one point on the surface of the paper pattern region R specified by the user, while being parallel to a contour line EL to be developed linearly as the warp line Lg. The contour line that is developed linearly with respect to the 2-D plane has been specified previously by the user.

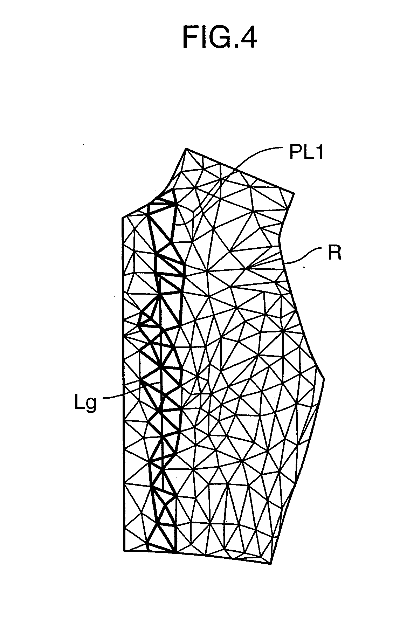

In Step S3 shown in Fig. 2, the display control portion 25 displays the warp line Lg set by the warp line set portion 23 on the surface of the paper pattern region R. In Step S4 , the polygon mesh set portion 241 sets a polygon mesh comprising plural triangular polygons for the paper pattern region R. In Step S5, the initial polygon line development portion 242 extracts, as an initial polygon line PL1, plural polygons that intersect with the warp line Lg from the polygon mesh set within the paper pattern region R. Fig. 4 is a view showing the initial polygon line PL1. Referring to Fig. 4, plural polygons shown in thick lines intersecting with the warp line Lg form the initial polygon line PL1.

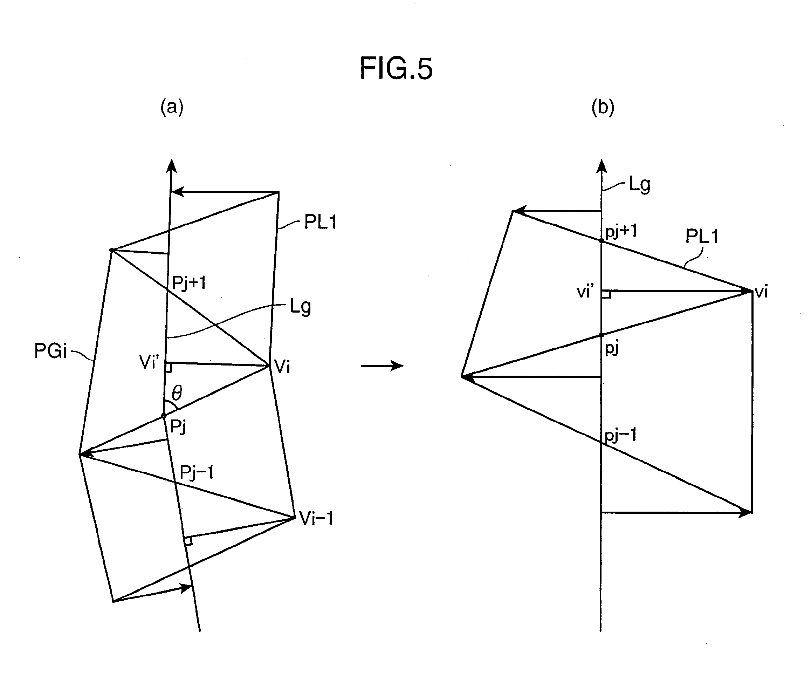

In Step S6, the initial polygon line development portion 242 develops the initial polygon line PL1 into a 2-D plane in such a manner that the warp line Lg intersecting with the initial polygon line PL1 becomes linear. Fig. 5 is a view used to describe the processing to develop the initial polygon line PL1 into a 2-D plane in such a manner that the warp line becomes linear. In the figure, (a) shows a part of the initial polygon line PL1 before development, and (b) shows a part of the initial polygon line PL1 after development.

This processing comprises three processes including first through third steps.

In the first step, a point $V_i'$ positioned at a shortest distance from the vertex $V_i$ is set on a line segment $P_jP_{j+1}$ linking $P_j$ and $P_{j+1}$, which are intersection points of two ridge lines of a polygon PGi that pass by the vertex Vi of the polygon PGi and the warp line Lg, after which $r_i$, $s_i$, $D_i$, and $d_i$ expressed, respectively, by Equation (1) through Equation (4) below are calculated.

$$ri = s_i \left| \overrightarrow{P_jV_i'} \right| / \left| \overrightarrow{P_jP_{j+1}} \right| \quad \cdots \text{EQUATION(1)}$$

$$s_i = \begin{cases} 1 & \overrightarrow{P_jV_i'} \cdot \overrightarrow{P_jP_{j+1}} > 0 \\ \\ -1 & \overrightarrow{P_jV_i'} \cdot \overrightarrow{P_jP_{j+1}} < 0 \end{cases} \quad \cdots \text{EQUATION(2)}$$

$$D_i = \left| \overrightarrow{V_i'V_i} \right| \cdots \text{EQUATION(3)}$$

$$di = \begin{cases} 1 & \text{WHEN Vi IS ON THE RIGHT OF VECTOR } \overrightarrow{P_jP_{j+1}} & \cdots \text{EQUATION(4)} \\ -1 & \text{OTHERWISE} \end{cases}$$

Herein, $r_i$ expressed by Equation (1) is obtained by multiplying a ratio of a line segment $P_jV_i'$ with respect to the line segment $P_jP_{j+1}$ by $s_i$, and $s_i$ shown in Equation (1) is defined by Equation (2). For $s_i$ expressed by Equation (2), $s_i = 1$ when the scalar product of a vector $P_jV_i'$ and a vector $P_jP_{j+1}$ is positive, and $s_i = -1$ when a scalar product of the vector $P_jV_i'$ and the vector $P_jP_{j+1}$ is negative.

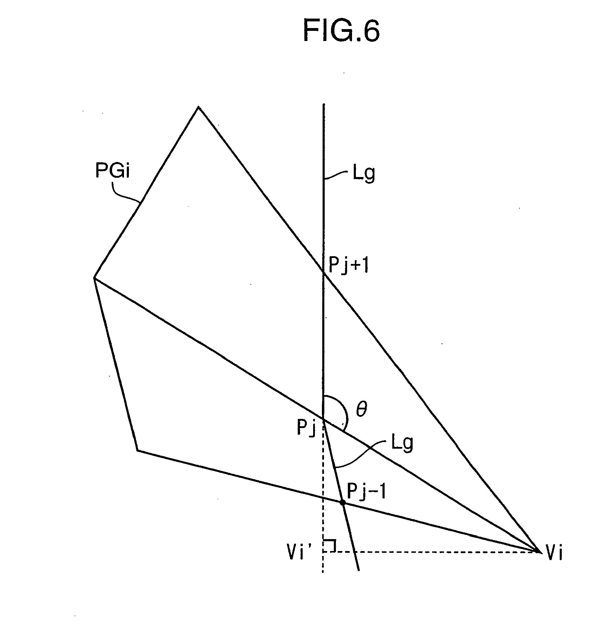

As is shown in (a) of the Fig. 5, in a case where the angle $\theta$ between the vector $P_jV_i'$ and the vector $P_jP_{j+1}$ is less than 90 degrees, the scalar product of the two vectors takes a positive value. In this case, we get $s_i = 1$ because the point $V_i'$ is an internally dividing point of the line segment $P_jP_{j+1}$. On the other hand, as is shown in Fig. 6, in a case where the angle $\theta$ is larger than 90 degrees, the scalar product takes a negative value. In this case, we get $s_i = -1$ because the point $V_i'$ is an externally dividing point of the line segment $P_jP_{j+1}$.

$D_i$ expressed by Equation (3) indicates the magnitude of the vector $V_i'V_i$. For $d_i$ expressed by Equation (4), di = 1 when the vertex $V_i$ is positioned on the right of the vector $P_jP_{j+1}$, and di = -1 when the vertex $V_i$ is positioned on the left of the vector $P_jP_{j+1}$.

In the second step, the coordinate of a point $p_{j+1}$ is determined in such a manner that the direction of a line segment $p_jp_{j+1}$ linking the point $P_{j+1}$ on the 2-D plane corresponding to the point $P_{j+1}$ and a point $p_j$ on the 2-D plane corresponding to the point $P_j$ coincides with the direction of a developed line segment $p_{j-1}p_j$ and the size of the line segment $P_jP_{j+1}$ is equal to the size of the line segment $p_jp_{j+1}$.

In the third step, Equation (5) below is computed to determine the position of the vertex $V_i$ on the 2-D plane.

$$v_i = p_j + r_i(p_{j+1} - p_j) + d_i * D_i * t_i \cdots \text{EQUATION(5)}$$

$$t_i \text{ IS A VECTOR ORTHOGONAL TO } p_jp_{j+1} \begin{cases} t_i.x = \left( \overrightarrow{p_jp_{j+1}} \right) \cdot y \\ t_i.y = -\left( \overrightarrow{p_jp_{j+1}} \right) \cdot x \end{cases} \cdots \text{EQUATION(6)}$$

Herein, $v_i$ expressed by Equation (5) is a point on the 2-D plane corresponding to the vertex $V_i$, $p_j$ is a point on the 2-D plane corresponding to the point $P_j$, $p_{j+1}-p$ represents a vector $p_jp_{j+1}$, and a vector $t_i$ is expressed by Equation (6). Herein, "$t_i.x$" expressed by Equation (6) represents the x component of the vector $t_i$, "$t_i.y$" represents the y component of the vector $t_i$, "$(p_jp_{j+1}).x$"represents the x component of the vector $p_jp_{j+1}$, and "$(p_jp_{j+1}).y$" represents the y component of $p_jp_{j+1}$. As is expressed by Equation (6), the x component of the vector $t_i$ is equal to the value of the y component of the vector $p_jp_{j+1}$, and the y component thereof is equal to a value obtain by multiplying the x component of the vector $p_jp_{j+1}$ by -1. In short, the vector $t_i$ is a vector that is perpendicular to the vector $p_jp_{j+1}$ while being equal in magnitude.

The position of the vertex $v_i'$ is determined by $r_i(p_{j+1}-p_j)$ shown in Equation (5). However, because $r_i$ has the relation expressed by Equation (1) and the size of the line segment $P_jP_{j+1}$ is equal to the size of the line segment $p_jp_{j+1}$, the size of the line segment $p_jV_i'$ eventually becomes equal to the size of the line segment $P_jV_i'$ . Also, the position of the vertex $v_i$ is determined by $d_i \cdot D_i \cdot t_i$ shown in Equation (6).

The initial polygon line development portion 242 applies the processing comprising the first through third steps on the respective polygons forming the initial polygon line PL1 sequentially from the polygon PG1 at one end of the initial polygon line PL1 to the polygon PGN at the other end to develop the initial polygon line PL1 into a 2-D plane. The initial polygon line PL1 is thus developed into a 2-D plane in such a manner that the warp line Lg becomes a straight line while the area and the shape of each polygon are maintained intact. Also, because the polygon line that intersects with the warp line is developed into a 2-D plane first, it is possible to develop the warp line to become linear in a precise manner.

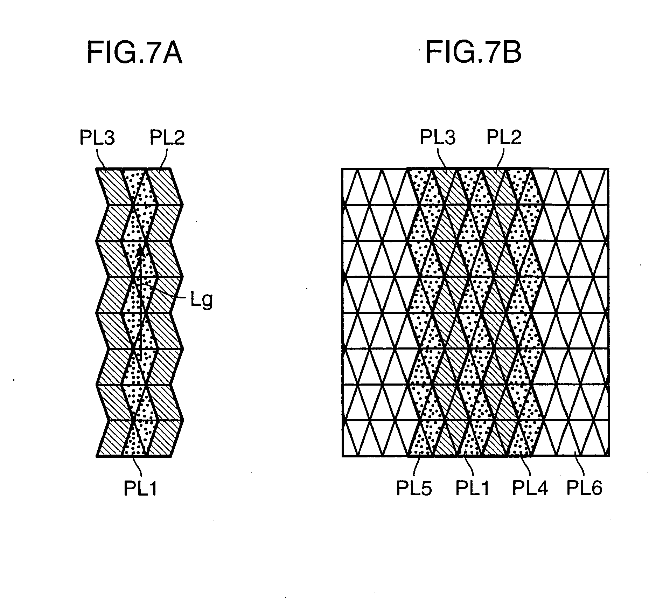

In Step S7 shown in Fig. 2, the polygon line development portion 243 extracts a polygon line PLi+1 adjacent to the developed polygon line PLi (i is a positive number indicating the extraction order of the polygon lines) from the paper pattern region R. Fig. 7 is a view used to describe a manner in which the polygon lines are extracted. As are shown in Figs. 7A and 7B, the polygon line development portion 243 extracts a polygon line PL2 adjacent to the initial polygon line PL1 on the right, and develops the extracted polygon line PL2 into a 2-D plane. Subsequently, it extracts a polygon line PL3 adjacent to the initial polygon line PL1 on the left, and develops the extracted polygon line PL3 into a 2-D plane. Thereafter, it extracts the polygon lines sequentially from the paper pattern region R in order of polygon lines PL4, PL5, and PL6. In short, the paper pattern region R is developed into a 2-D plane so as to spread from side to side about the initial polygon line PL1.

It should be noted that the extraction order of the polygon lines specified above is a mere example, and the polygon lines may be extracted sequentially from the paper pattern region R in order of the initial polygon line PL1 followed by the polygon line PL3 adjacent on the left and then the polygon line PL2 adjacent to the initial polygon line PL1 on the right and so forth.

In a case where the initial polygon line PL1 is a polygon line on the left end of the paper pattern region R, the respective polygon lines are extracted sequentially to spread in the right direction in the paper pattern region R. In a case where the initial polygon line PL1 is a polygon line on the right end of the paper pattern region R, the respective polygon lines are extracted sequentially to spread in the left direction in the paper pattern region R.

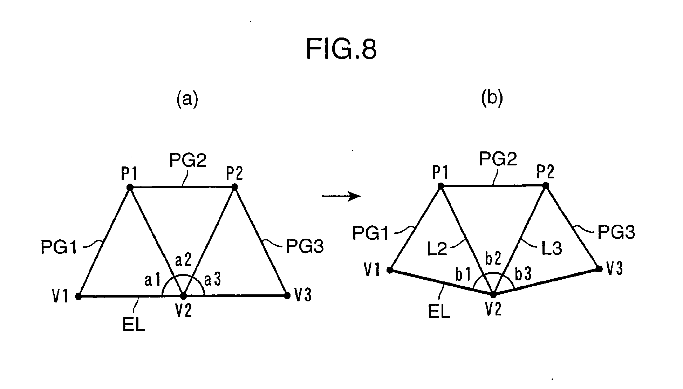

In Step S8 shown in Fig. 2, the polygon line development portion 243 develops the extracted polygon line PLi into a 2-D plane through the development method using a mass-spring model. Fig. 8 is a view used to describe the development processing. In the figure, (a) shows polygons before development and (b) shows polygons after development.

V1, V2, and V3 shown in Fig. 8 represent the vertices of the polygons that have been developed into a 2-D plane and a straight line passing by the vertices V1 through V3 is referred to as a boundary line EL. Herein, a1, a2, and a3 represent, respectively, angles at the vertex V2 of the polygons PG1 through PG3 before development. Herein, b1, b2, and b3 represent, respectively, angles at the vertex V2 of the polygons PG1 through PG3 after development. The development portion 24 determines the positions of the vertices P1 and P2 on the 2-D plane for the angles to satisfy a1/b1 = a2/b2 = a3/b3, and then develops the polygons PG1 through PG3 into a 2-D plane.

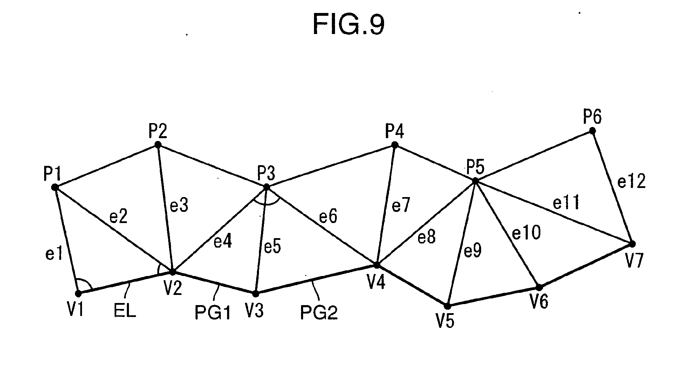

Fig. 9 is a view used to describe the development processing of the polygon line in detail. As is shown in Fig. 9, of the vertices on the boundary line EL, because the vertex P1 is connected to two vertices, V1 and V2, the position thereof is determined so as to maintain the lengths of the sides e1 and e2. Herein, when Angl (Angl = $\angle P_1V_1V_2$ + $\angle P_1V_2V_1$) is close to 180 degrees, the sides e1 and e2 become extensively long. When Angl is larger than 180 degrees, overlapping of the polygons occurs. Hence, in order to prevent the overlapping, the polygon line development portion 243 determines the position of P1 for Angl to become smaller.

Of the vertices on the boundary line EL, the vertex P2 is connected to one vertex V2 alone. For such a vertex, the polygon line development portion 243 determines the position of the vertex so as to maintain the length of the side e3 intact. Of the vertices on the boundary line EL, the vertex P3 is connected to three vertices. For such a vertex, the polygon line development portion 243 determines the position of the vertex so as to maintain the lengths of the side e4 at one end and the side e6 at the other end intact. When $\angle V_2P_3V_4$ is close to 0 degree, because the lengths of the sides e4 and e6 become extremely long, the polygon line development portion 243 removes the polygons PG1 and PG2.

In a case where the vertices P1 and P2 are vertices on the counter line specified by the user to be a straight line and developed into a 2-D plane to be parallel to the warp line Lg, the development portion 24 determines the positions of the vertices P1 and P2 on the 2-D plane for the angles to satisfy a1/b1 = a2/b2 = a3/b3 and for the line segment linking the vertices P1 and P2 to be parallel to the warp line Lg, and then develops the polygons PG1 through PG3 into a 2-D plane.

In Step S9, the polygon line development portion 243 performs local relaxation processing to move the positions of the respective vertices of the polygon line PLi by applying a mass-spring model to the developed polygon line PLi in relaxing distortions of the polygon line PLi.

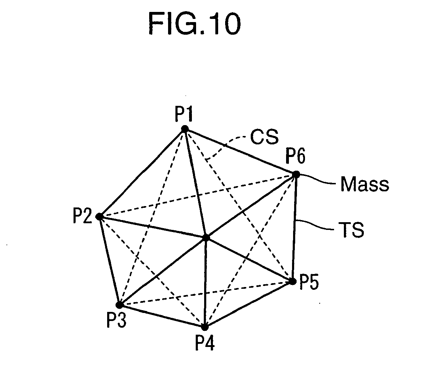

Fig. 10 is a view showing a mass-spring model. Given the respective vertices P1 through P6 of the polygons as mass points, then the mass-spring model comprises a tension spring TS set on the sides that directly connect the mass points and a crossed spring CS set between the mass points of two adjacent polygons to cross the side shared by these polygons. The tension spring TS represents stress induced inside the fabric. The crossed spring CS prevents the polygon mesh from being stretched exceedingly.

In the mass-spring, a force acting on two mass points $P_i$ and $P_j$ by the spring (tension spring TS or crossed spring CS) connecting these mass points is expressed by Equation (7) below.

$$F_{i,j}=-k_{i,j}\left(I_{i,j}-I^0_{i,j}\frac{I_{i,j}}{|I_{i,j}|}\right)=-k_{i,j}\left[\left(x_i-x_j\right)-I^0_{i,j}\frac{x_i-x_j}{|x_i-x_j|}\right] \cdots \text{EQUATION(7)}$$

In Equation (7), $k_{i,j}$ indicates the spring modulus between the mass points, $I_{i,j}$ indicates the vector of the spring, $I^0_{i,j}$ indicates the initial length of the spring, and $x_i$ and $x_j$ indicate the positions of the mass points $P_i$ and $P_j$, respectively. The initial length $I^0_{i,j}$ of the tension spring TS is equal to the length of the corresponding side in the 3-D space, and the spring modulus $k_{i,j}$ is determined according to the length of the initial length $I^0_{i,j}$. The initial length $I^0_{i,j}$ of the crossed spring CS is equal to the length between the vertices of the corresponding two polygons developed into a 2-D plane.

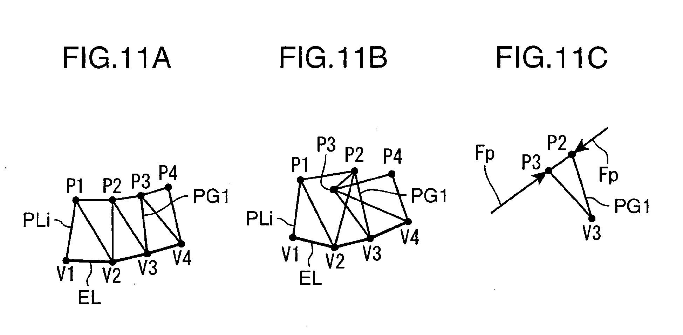

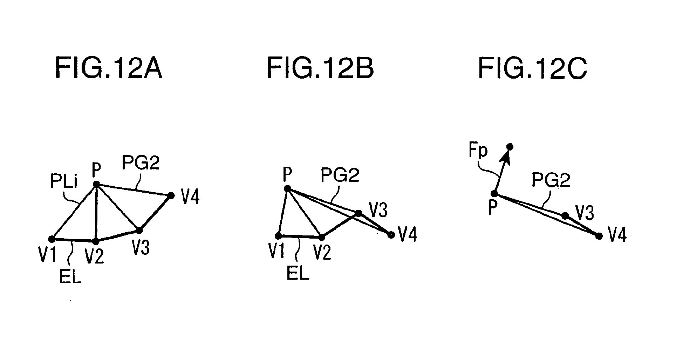

When the polygon line development portion 243 performs the local relaxation processing, it causes a penalty force to act on the polygons removed due to the occurrence of the overlapping in relaxing distortions of the polygon line PLi for further relaxing the distortions of the polygon mesh. Fig. 11 and Fig. 12 are views used to describe a penalty force. Fig. 11A and Fig. 12A show the polygon line PLi before development, Fig. 11B and Fig. 12B show the polygon line PLi after development, and Fig. 11C and Fig. 12C are views showing a penalty force acting on the mass points. Also, P and P1 through P4 indicate vertices before development and V1 through V4 indicate vertices after development.

In Fig. 11B, overlapping occurs in the polygon PG1 . In the polygon PG1, one of three vertices, the vertex V3, is present on the boundary line EL. For the polygon PG1 as above, of the three vertices of the polygon PG1 to be removed as is shown in Fig. 11C, the polygon line development portion 243 sets a penalty force Fp on each of the two vertices P2 and P3 that are not present on the boundary line EL in a direction in which these vertices attract each other on a straight line linking these vertices.

In Fig. 12B, overlapping occurs in the polygon PG2. In the polygon PG2, two of three vertices, the vertices V1 and V2, are present on the boundary line EL. For the polygon PG2 as above, the polygon line development portion 243 sets a penalty force Fp on one vertex P that is not present on the boundary line EL as is shown in Fig. 12C in a direction perpendicular to the boundary line EL linking the vertices V1 and V2. The value of a penalty force is described in Known Reference Document 1.

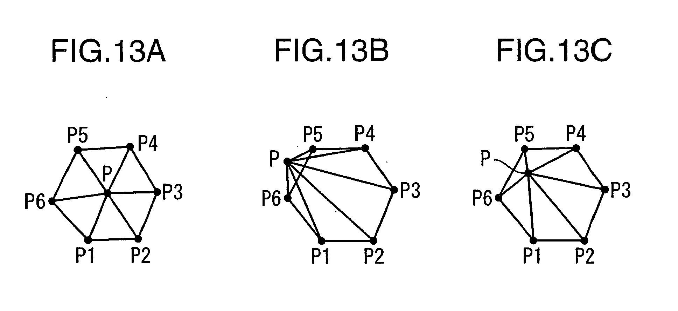

In Step S10, processing (global relaxation processing) to move the respective vertices of the polygons is performed using a mass-spring model for the entire polygon mesh comprising the polygon line PLi immediately after the relaxation processing was applied and the polygon lines PL1 through PLi-1 to which the development processing has been applied for the distortions of the entire polygon mesh to be relaxed. Herein, there may be polygons that cause overlapping as the consequence of the movement of the respective vertices. In such a case, the polygon line development portion 243 performs processing to correct the overlapping as needed. Fig. 13 is a view showing overlapping caused by the global relaxation processing. Fig. 13A shows the polygon mesh before the global relaxation processing, Fig. 13B shows the polygon mesh after the global relaxation processing, and Fig. 13C shows the polygon mesh in which the overlapping has been corrected.

As is shown in Fig. 13B, the vertex P is moved to the outside of the polygon surrounded by the vertices P1 through P6 by the global relaxation processing, and the polygon comprising the vertices P, P5, and P6 causes overlapping. In this case, the polygon line development portion 243 prevents the occurrence of the overlapping by lessening a quantity of movement of the vertex P (for example , to 1/2) for the vertex P to be positioned inside the polygon surrounded by the vertices P1 through P6 (see Fig. 13C).

In Step S11, in a case where all the polygons have been developed into a 2-D plane (YES in S11), the processing is terminated, and in a case where not all the polygons have been developed into a 2-D plane (NO in S11), the flow returns to the processing in Step S7. Hence, a polygon line adjacent to the developed polygon line is extracted and processing in Step S8 and the following steps is performed.

The virtual paper pattern forming device is able to develop the paper pattern region R into a 2-D plane by setting two warp lines to specify both the warp and weft thread directions in the paper pattern region R in such a manner that the two warp lines are orthogonal to each other. In this case, in Step S2, the warp line set portion 23 sets a first warp line on the surface of the paper pattern region R using any of the first through third methods according to a manipulation instruction from the user, and then sets a second warp line using the second method according to a manipulation instruction from the user.

In Step S5, the initial polygon line development portion 242 extracts polygon lines that intersect, respectively, with the two warp lines, and develops both the polygon lines into 2-D planes in such a manner that the two warp lines will be orthogonal to each other and also become straight lines.

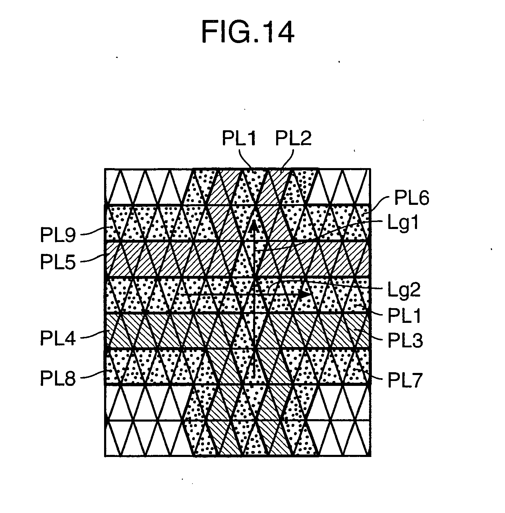

In this case, the initial polygon line development portion 242 extracts the polygon lines in a manner shown in Fig. 14 in Step S7. Fig. 14 is a view showing a manner in which the polygon lines are extracted from the paper pattern region R when two warp lines are set. As is shown in Fig. 14, when the development processing for the cross-shaped initial polygon lines PL1 and PL1 ends, the polygon lines PL2 through PL5 adjacent to the initial polygon line PL1 are extracted sequentially from four regions divided by the initial polygon lines PL1 and PL1. When processing in Steps S8 through S11 is performed on each polygon line, polygon lines PL6 through PL9 adjacent to the polygon lines PL2 through PL5, respectively, are extracted subsequently. As has been described, when two warp lines are set, polygon lines are extracted sequentially diagonally to the outside in the four regions divided by the initial polygon lines PL1.

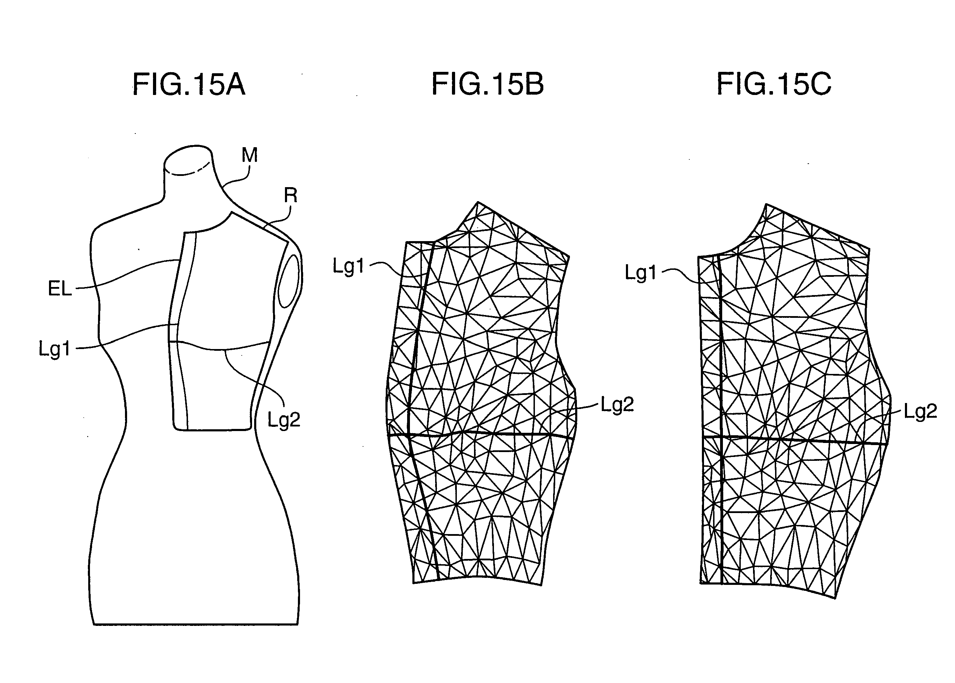

A calculation result of the virtual paper pattern forming device will now be shown. Fig. 15 is a view showing a virtual paper pattern formed by the virtual paper pattern forming device. Fig. 15A shows a paper pattern region R of a 3-D virtual dress model formed on the virtual human body model M. Fig. 15B shows a virtual paper pattern formed by the method in the related art that does not take the warp line into account. Fig. 15C is a virtual paper pattern formed by the virtual paper pattern forming device. As is shown in Fig. 15A, two warp lines Lg1 and Lg2 are set on the surface of the paper pattern region R. Herein, the warp line Lg1 has been set by the third method, and it is therefore set to be parallel to the counter line EL of the paper pattern region R that is developed linearly on the surface of the paper pattern region R. Also, the warp line Lg2 has been set by the second method, and it is therefore a line linking two points on the surface of the paper pattern region R.

When the paper pattern region R shown in Fig. 15A is developed into a 2-D plane without taking the warp lines Lg1 and Lg2 into account, as is shown in Fig. 15B, both the warp lines Lg1 and Lg2 on the formed virtual paper pattern are curved, and it is understood that linear warp lines cannot be obtained. On the other hand, when the paper pattern region R shown in Fig. 15A is developed into a 2-D plane by the virtual paper pattern forming device, as is shown in Fig. 15C, the warp lines Lg1 and Lg2 are orthogonal to each other and become linear.

As has been described, according to the virtual paper pattern forming device, because the warp line can be set directly on the virtual dress model formed within a 3-D space, the warp line can be set while the user understands the position of the virtual paper pattern on the virtual dress model. It is thus possible to set the warp line with ease.

The virtual paper pattern forming device of the embodiment above is the one that forms a virtual paper pattern of the virtual dress model. The invention, however, is not limited to the embodiment, and the virtual paper pattern forming device may form a virtual paper pattern of car sheets, shoes, stuffed toys and the like adopted as a three-dimensional object model. In addition, a material used to make the three-dimensional object model is not limited to fabric, and skins of animals, such as cows and sheep, may be used as well. In the case of skins, because the coefficient of stretch in the backbone direction is low, this direction is set as the reference line.

Also, the virtual paper forming device of the invention may be applied to form a virtual paper pattern of a three-dimensional object model made of a material having no anisotropy (for example, vinyl). Even in a case where a paper pattern of a three-dimensional object model is formed using a material having no anisotropy (for example, vinyl), there is a need to make a specific portion of the paper pattern straight, and the invention is useful in such a case.

In addition, a virtual paper pattern forming program of the invention may be stored in a computer-readable recording medium, such as a CD-ROM and a DVD-ROM, to provide the virtual paper pattern forming program to the user. Further, the virtual paper pattern forming program may be provided to the user by downloading the virtual paper pattern forming program from a WEB server having stored the virtual paper pattern forming program.

(Summary of the Invention)

(1) A virtual paper pattern forming program of the invention is a virtual paper pattern forming program that virtually forms a paper pattern of a three-dimensional object, causing a computer to function as follows: three-dimensional object model forming means for acquiring 3-D data of the three-dimensional object and forming a virtual three-dimensional object model within a virtual 3-D space; contour line setting means for setting a contour line of the paper pattern on a surface of the virtual three-dimensional object model to divide the surface of the virtual three-dimensional object model into plural regions; reference line setting means for setting a reference line for one region divided by the contour line setting means according to a manipulation instruction from a user; and development means for developing the virtual three-dimensional object model in a 2-D space region by region in such a manner that the reference line becomes linear to form a virtual paper pattern.

Also, a virtual paper pattern forming device of the invention is a virtual paper pattern forming device that virtually forms a paper pattern of a three-dimensional object, comprising: three-dimensional object model forming means for acquiring 3-D data of the three-dimensional object and forming a virtual three-dimensional object model within a virtual 3-D space; contour line setting means for setting a contour line of the paper pattern on a surface of the virtual three-dimensional object model to divide the surface of the virtual three-dimensional object model into plural regions; reference line setting means for setting a reference line for one region divided by the contour line setting means according to a manipulation instruction from a user; and development means for developing the virtual three-dimensional object model in a 2-D space for each divided region in such a manner that the reference line becomes linear to form a virtual paper pattern.

Also, a virtual paper pattern forming method of the invention is a virtual paper pattern forming method for enabling a computer to virtually form a paper pattern of a three-dimensional object, the computer including three-dimensional object model forming means, contour line setting means, reference line setting means, and development means, the method including: a step of acquiring 3-D data of the three-dimensional object and forming a virtual three-dimensional object model within a virtual 3-D space by the three-dimensional object model forming means; a step of setting a contour line of the paper pattern on a surface of the virtual three-dimensional object model to divide the surface of the virtual three-dimensional object model into plural regions by the contour line setting means; a step of setting a reference line for one region divided by the contour line setting means according to a manipulation instruction from a user by the reference line setting means; and a step of developing the virtual three-dimensional object model in a 2-D space for each divided region in such a manner that the reference line becomes linear to form a virtual paper pattern by the development means.

According to these configurations, 3-D data of a three-dimensional object is acquired to form a virtual three-dimensional object model within a virtual 3-D space. The contour line is set on the surface of the virtual three-dimensional object model, and a reference line is set on the surface of one region (one arbitrary region among plural regions on the surface of the virtual 3-D three-dimensional object) among plural regions divided by the contour line according to a manipulation instruction from the user. A virtual paper pattern is then formed by developing each region into a 2-D plane in such a manner that the reference line thus set becomes a straight line. The user is therefore able to set the reference line directly on the virtual three-dimensional object model formed within the 3-D space. As a consequence, the user is able to set the reference line while he understands the position or the like of the virtual paper pattern with respect to the entire virtual three-dimensional object model, which enables the user to set the reference line with ease.

(2) In the configuration above, it is preferable that the development means includes: mesh setting means for setting a polygon mesh in each region; first polygon line development means for extracting, as an initial polygon line, plural polygons intersecting with the reference line from the polygon mesh set in the region, and developing the initial polygon line into a 2-D plane in such a manner that the reference line of the extracted initial polygon line becomes a straight line; and second polygon line development means for extracting a polygon line adjacent to a polygon line for which the processing has been completed, and developing respective regions into the 2-D plane by repetitively performing processing to develop the extracted polygon line into the 2-D plane.

According to this configuration, a polygon mesh is set for each region, and of polygons forming the polygon mesh thus set, an initial polygon line comprising polygons intersecting with the reference lines is extracted, and the initial polygon line is developed into a 2-D plane in such a manner that the reference line becomes a straight line. When the development processing of the initial polygon line into the 2-D plane ends, a polygon line adjacent to the initial polygon line is developed successively into a 2-D plane. The development processing into a 2-D plane is performed using a polygon line as a unit in such a manner that when the polygon line of interest is developed into a 2-D plane, a polygon line adjacent to this polygon line is developed next into a 2-D plane. It is therefore possible to develop the polygon mesh without any trouble even when the polygon mesh is developed into a 2-D plane in such a manner that the reference line becomes linear.

(3) Also, in the configuration above, it is preferable that the first and second polygon line development means develop the polygon line into the 2-D plane in such a manner so as to maintain an area of each polygon intact.

According to this configuration, because the polygon line is developed into a 2-D plane in such a manner so as to maintain the area of each polygon intact, it is possible to develop the polygon line into a 2-D plane in such a manner that the shape of the polygons set in the three-dimensional object model is maintained intact.

(4) Also, in the configuration above, it is preferable that the polygons are triangular, and that the first polygon line development means specifies a vertex $V_i$ among vertices of polygons forming the initial polygon as an object to be developed and develops the specified vertex $V_i$ on the 2-D plane using Equation (A) below:

$$v_i = v_i' + d_i \times D_i \times t_i \qquad (A)$$

where $v_i$ indicates a coordinate when a vertex $V_i$ is developed on the 2-D plane; $v_i'$ indicates a coordinate when a point $V_i'$ on the reference line linking the vertex $V_i$ and the reference line by a shortest distance is developed into the 2-D plane; $D_i$ indicates a length from the vertex $V_i$ and the point $V_i'$ ; $d_i$ takes 1 when the vertex $V_i$ is on a right side of a vector $P_j P_{j+1}$, which is a vector linking intersection points $P_j$ and $P_{j+1}$ of two ridge lines of a polygon passing by the vertex $V_i$ and the reference line, and takes -1 when the vertex $V_i$ is on a left side; and $t_i$ indicates a vector of same magnitude of a vector $p_j p_{j+1}$, which is a vector linking coordinates $p_j$ and $p_{j+1}$ when the intersection points $P_j$ and $P_{j+1}$ are developed

into the 2-D plane, and orthogonal to the vector $p_jp_{j+1}$.

According to this configuration, the initial polygon is developed into a 2-D plane in such a manner that $D_i$ indicating the length of the vertex $V_i$ and the point $V_i'$ set within the 3-D space and the magnitude of $t_i$(a vector orthogonal to the vector $P_jP_{j+1}$) are maintained intact. It is therefore possible to develop the initial polygon line in a 2-D space in such a manner that the shape of the initial polygon line set within the 3-D space is maintained intact.

(5) In the configuration above, it is preferable that the first polygon line development means determines the coordinate of $v_i'$ in such a manner that a length of a line segment $P_jV_i'$ is equal to a length of a line segment $p_jV_i'$.

According to this configuration, because the coordinate of $v_i'$ is determined in such a manner that the length of the line segment $P_jV_i'$ is equal to the length of the line segment $p_jv_i'$, it is possible to develop the first polygon line in a 2-D space in such a manner that the shape of the first polygon line within the 3-D space is maintained intact.

(6) Also, in the configuration above, it is preferable that the first polygon line development means determines the coordinate of $p_{j+1}$ in such a manner that a direction of the line segment $p_jp_{j+1}$ coincides with a direction of a developed line segment $p_{j-1}p_j$ and a size of the line segment $P_jP_{j+1}$ is equal to a size of the line segment $p_jp_{j+1}$.

According to this configuration, because the coordinate of $p_{j+i}$ is determined in such a manner that the direction of the line segment $p_jp_{j+i}$ coincides with the direction of the developed line segment $p_{j-1}p_j$, while the size of the line segment $p_jp_{j+1}$ is equal to the size of the line segment $P_jP_{j+1}$, it is possible to develop the initial polygon in such a manner that the reference line becomes a straight line while the shape of the initial polygon on the 3-D space is maintained intact.

(7) Also, in the configuration above, it is preferable that the reference line setting means sets two reference lines that cross with each other on a surface of one region, and that the development means develops the region in a 2-D space in such a manner that the two reference lines are orthogonal to each other and become linear.

According to this configuration, by setting two reference lines on the surface of one region, a virtual paper pattern is formed in such a manner that these two reference lines are orthogonal to each other and become linear. The user is therefore able to obtain a virtual paper pattern in which two reference lines, which respectively correspond to the warp and wept threads in the case of, for example, fabric, are set by merely performing a manipulation as simple as setting two reference lines on the surface of the virtual three-dimensional object model.

(8) Also, in the configuration above, it is preferable that the reference line setting means sets the reference line on a surface of one region of the virtual three-dimensional object model in such a manner so as to pass by one point within the one region specified by the user and to go along a direction of gravitational force pre-set within the virtual 3-D space.

According to this configuration, when the user specifies one point on the surface of the virtual three-dimensional object model, the reference line is set automatically within a region including this one point in such a manner so as to pass by this one point and to go along the direction of gravitational force. The user is therefore able to obtain a virtual paper pattern having the reference line that takes the direction of gravitational force into account by performing a manipulation as simple as specifying one point.

(9) Also, in the configuration above, it is preferable that the reference setting means sets the reference line on a surface of one region of the virtual three-dimensional object model so as to link two points within the one region specified by the user.

According to this configuration, the user is able to set the reference line in an arbitrary direction by performing a manipulation as simple as specifying two points in one region.

(10) Also, in the configuration above, it is preferable that the reference line setting means sets the reference line on a surface of the virtual three-dimensional object model to be parallel to a contour line of one side that is developed linearly by the development means.

According to this configuration, the user is able to set the reference line that is parallel to the contour line to be developed linearly on the surface of the region by merely specifying one point within the region.

(11) Also, in the configuration above, it is preferable that the reference line setting means sets the reference line using any of the following methods specified by the user: a first method by which the reference line is set on a surface of one region of the virtual three-dimensional object model so as to pass by one point within the one region specified by the user and to go along a direction of gravitational force pre-set within the virtual 3-D space; a second method by which the reference line is set on a surface of one region of the virtual three-dimensional object model so as to link two points within the one region specified by the user; and a third method by which the reference line is set on a surface of the virtual three-dimensional object model to be parallel to a contour line of one side that is developed linearly by the development means.

According to this configuration, because the first through third methods can be chosen with ease, the convenience to the user can be enhanced.

(12) Also, in the configuration above, it is preferable that the three-dimensional object is made of a material having anisotropy in a stretching property.

According to this configuration, the reference line can be readily set for a virtual paper pattern of a three-dimensional object made of a material having anisotropy in a stretching property (for example, fabric and skins). It is thus possible to form a highly stable three-dimensional object by setting the reference line for a direction in which the coefficient of stretch of the material is lower (for example, the warp thread direction in the case of fabric).

**Industrial Applicability**

According to the invention, the reference line can be set directly on a virtual three-dimensional object model, and the invention is therefore useful for CAD that forms a paper pattern of a dress on the computer.

**Claims**

1. A virtual paper pattern forming program that virtually forms a paper pattern of a three-dimensional object, causing a computer to function as follows:

   three-dimensional object model forming means for acquiring 3-D data of the three-dimensional object and forming a virtual three-dimensional object model within a virtual 3-D space;
   contour line setting means for setting a contour line of the paper pattern on a surface of the virtual three-dimensional object model to divide the surface of the virtual three-dimensional object model into plural regions;
   reference line setting means for setting a reference line for one region divided by the contour line setting means according to a manipulation instruction from a user; and
   development means for developing the virtual three-dimensional object model in a 2-D space region by region in such a manner that the reference line becomes linear to form a virtual paper pattern.

2. The virtual paper pattern forming program according to Claim 1, wherein the development means includes:

   mesh setting means for setting a polygon mesh in each region;
   first polygon line development means for extracting, as an initial polygon line, plural polygons intersecting with the reference line from the polygon mesh set in the region, and developing the initial polygon line into a 2-D plane in such a manner that the reference line of the extracted initial polygon line becomes a straight line; and
   second polygon line development means for extracting a polygon line adjacent to a polygon line for which development processing into the 2-D plane has been completed, and developing respective regions into the 2-D plane by repetitively performing processing to develop the extracted polygon line into the 2-D plane.

3. The virtual paper pattern forming program according to Claim 2, wherein:

   the first and second polygon line development means develop the polygon line into the 2-D plane in such a manner so as to maintain an area of each polygon intact.

4. The virtual paper pattern forming program according to any of Claims 1 through 3, wherein:

   the polygons are triangular; and
   the first polygon line development means develops respective vertices $V_i$ forming the initial polygon on the 2-D plane using Equation (A) below:

   $$v_i = v_i' + d_i \times D_i \times t_i \qquad (A)$$

   where $v_i$ indicates a coordinate when a vertex $V_i$ is developed on the 2-D plane; $v_i'$ indicates a coordinate when a point $V_i'$ on the reference line linking the vertex $V_i$ and the reference line by a shortest distance is developed into the 2-D plane; $D_i = |\text{vector } V_iV_i'|$; di takes 1 when the vertex $V_i$ is on a right side of a vector $P_jP_{j+1}$, which is a vector linking intersection points $P_j$ and $P_{j+1}$ of two ridge lines of a polygon passing by the vertex $V_i$ and the reference line, and takes -1 when the vertex $V_i$ is on a left side; and $t_i$ indicates a vector of same magnitude of a vector $p_jp_{j+1}$, which is a vector linking coordinates $p_j$ and $p_{j+1}$ when the intersection points $P_j$ and $P_{j+1}$ are developed into the 2-D plane, and orthogonal to the vector $p_jp_{j+1}$.

5. The virtual paper pattern forming program according to Claim 4, wherein:

the first polygon line development means determines the coordinate of $v_i$' in such a manner that a length of a line segment $P_jV_i$' is equal to a length of a line segment $p_jv_i$'.

**6.** The virtual paper pattern forming program according to Claim 4 or 5, wherein:

the first polygon line development means determines the coordinate of $p_{j+1}$ in such a manner that a direction of the line segment $p_jp_{j+1}$ coincides with a direction of a developed line segment $p_{j-1}p_j$ and a size of the line segment $P_jP_{j+1}$ is equal to a size of the line segment $p_jp_{j+1}$.

**7.** The virtual paper pattern forming program according to any of Claims 1 through 6, wherein:

the reference line setting means sets two reference lines that cross with each other on a surface of one region; and the development means develops the region in a 2-D space in such a manner that the two reference lines are orthogonal to each other and become linear.

**8.** The virtual paper pattern forming program according to any of Claims 1 through 7, wherein:

the reference line setting means sets the reference line on a surface of one region of the virtual three-dimensional object model in such a manner so as to pass by one point within the one region specified by the user and to go along a direction of gravitational force pre-set within the virtual 3-D space.

**9.** The virtual paper pattern forming program according to any of Claims 1 through 7, wherein:

the reference setting means sets the reference line on a surface of one region of the virtual three-dimensional object model so as to link two points within the one region specified by the user.

**10.** The virtual paper pattern forming program according to any of Claims 1 through 7, wherein:

the reference line setting means sets the reference line on a surface of the virtual three-dimensional object model to be parallel to a contour line of one side that is developed linearly by the development means.

**11.** The virtual paper pattern forming program according to any of Claims 1 through 7, wherein the reference line setting means sets the reference line using any of the following methods specified by the user:

a first method by which the reference line is set on a surface of one region of the virtual three-dimensional object model so as to pass by one point within the one region specified by the user and to go along a direction of gravitational force pre-set within the virtual 3-D space; a second method by which the reference line is set on a surface of one region of the virtual three-dimensional object model so as to link two points within the one region specified by the user; and a third method by which the reference line is set on a surface of the virtual three-dimensional object model to be parallel to a contour line of one side that is developed linearly by the development means.

**12.** The virtual paper pattern forming program according to any of Claims 1 through 11, wherein:

the three-dimensional object is made of a material having anisotropy in a stretching property.

**13.** A virtual paper pattern forming device that virtually forms a paper pattern of a three-dimensional object, comprising:

three-dimensional object model forming means for acquiring 3-D data of the three-dimensional object and forming a virtual three-dimensional object model within a virtual 3-D space; contour line setting means for setting a contour line of the paper pattern on a surface of the virtual three-dimensional object model to divide the surface of the virtual three-dimensional object model into plural regions; reference line setting means for setting a reference line for one region divided by the contour line setting means according to a manipulation instruction from a user; and development means for developing the virtual three-dimensional object model in a 2-D space for each divided region in such a manner that the reference line becomes linear to form a virtual paper pattern.

**14.** A virtual paper pattern forming method for enabling a computer to virtually form a paper pattern of a three-dimensional object, the computer including three-dimensional object model forming means, contour line setting means, reference line setting means, and development means, the method including:

a step of acquiring 3-D data of the three-dimensional object and forming a virtual three-dimensional object model within a virtual 3-D space by the three-dimensional object model forming means;

a step of setting a contour line of the paper pattern on a surface of the virtual three-dimensional object model to divide the surface of the virtual three-dimensional object model into plural regions by the contour line setting means;

a step of setting a reference line for one region divided by the contour line setting means according to a manipulation instruction from a user by the reference line setting means; and

a step of developing the virtual three-dimensional object model in a 2-D space for each divided region in such a manner that the reference line becomes linear to form a virtual paper pattern by the development means.

# FIG.1

EP 1 811 410 A1

# FIG.2

START

S1
IS MANIPULATION INSTRUCTION TO SET WARP LINE ACCEPTED ? — NO

YES

SET WARP LINE — S2

DISPLAY WARP LINE — S3

SET POLYGON MESH — S4

EXTRACT INITIAL POLYGON LINE — S5

DEVELOP INITIAL POLYGON LINE TWO DIMENSIONALLY — S6

①

EXTRACT POLYGON LINE ADJACENT TO DEVELOPED POLYGON LINE — S7

DEVELOP EXTRACTED POLYGON LINE INTO 2-D PLANE — S8

LOCAL RELAXATION PROCESSING — S9

GLOBAL RELAXATION PROCESSING — S10

S11
① — NO — HAVE ALL POLYGONS BEEN DEVELOPED?

YES

END

# FIG.3

CM    WARP LINE

C1   ⊙ DIRECTION OF GRAVITATIONAL FORCE

C2   ○ ARBITRARY DIRECTION

C3   ○ DIRECTION OF DESIGN LINE

P1

M

P1

Lg

EL

P2

R

G

# FIG.4

# FIG.5

PL1

Pj+1

Lg

PGi

Vi'

Vi

θ

Pj

Pj−1

Vi−1

Lg

pj+1

PL1

vi'

vi

pj

pj−1

EP 1 811 410 A1

# FIG.6

# FIG.7A

PL3   PL2

Lg

PL1

# FIG.7B

PL3   PL2

PL5   PL1   PL4   PL6

# FIG.8

(a)

(b)

# FIG.9

# FIG.10

FIG.11A          FIG.11B          FIG.11C

## FIG.12A

## FIG.12B

## FIG.12C

FIG.13A          FIG.13B          FIG.13C

# FIG.14

FIG.15A

FIG.15B

FIG.15C

## INTERNATIONAL SEARCH REPORT

| International application No. |
|---|
| PCT/JP2005/018295 |

**A. CLASSIFICATION OF SUBJECT MATTER**
*G06F17/50* (2006.01), *A41H3/00* (2006.01)

According to International Patent Classification (IPC) or to both national classification and IPC

**B. FIELDS SEARCHED**

Minimum documentation searched (classification system followed by classification symbols)
*G06F17/50* (2006.01), *A41H3/00* (2006.01)

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 8-246219 A (Toyobo Co., Ltd.), 24 September, 1996 (24.09.96), Par. Nos. [0009], [0010] (Family: none) | 1-14 |
| A | JP 2002-245115 A (Toray Industries, Inc.), 30 August, 2002 (30.08.02), Par. Nos. [0086] to [0110] (Family: none) | 1-14 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 November, 2005 (01.11.05) | 15 November, 2005 (15.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• JP 2004070519 A

### Non-patent literature cited in the description

• Flattening triangulated surfaces using a mass-spring model. **JITUO LI ; DONGLIANG ZHANG ; GUO-DONG LU ; YANYING PENG ; XING WEN ; YOSHI-YUKI SAKAGUTI.** The International Journal of Advanced Manufacturing Technology. Springer-Verlag London Limited